# EUROPÄISCHE PATENTSCHRIFT

(11) **EP 1 679 291 B1**
(45) Veröffentlichungstag und Bekanntmachung des Hinweises auf die Patenterteilung: **10.07.2019**
(21) Anmeldenummer: 06000317.5
(22) Anmeldetag: 09.01.2006
(51) Int. Cl.: C03C 17/22, C03C 17/34

(54) **Verfahren zur Herstellung einer reflexionsmindernden Beschichtung**
Process for the manufacturing of low reflection coating
Procédé pour la fabrication d'une couche à reflection basse

(30) Priorität: 10.01.2005 DE 102005001135; 21.02.2005 DE 102005007825
(43) Veröffentlichungstag der Anmeldung: 12.07.2006
(73) Patentinhaber: INTERPANE Entwicklungs- und Beratungsgesellschaft mbH, 37697 Lauenförde (DE)
(72) Erfinder: Segner, Johannes, Dr., 88212 Ravensburg (DE); Weis, Hansjörg, Dr., 37671 Höxter (DE); Mönnekes, Jörg, 37671 Höxter (DE)
(74) Vertreter: Körfer, Thomas

(56) Entgegenhaltungen:
- EP-A- 1 484 293
- EP-A2- 1 074 526
- DE-A1- 19 918 811
- DE-U1- 29 923 238
- JP-A- 2001 272 506
- US-A- 4 478 873
- US-A- 4 830 879
- US-A- 5 116 665
- US-A- 5 569 362
- US-A1- 2004 087 139
- BIN Y ET AL: "INFRARED STUDY OF THE H+ IRRADIATED C-SIC FILMS" JOURNAL OF MATERIALS SCIENCE LETTERS, CHAPMAN AND HALL LTD. LONDON, GB, Bd. 21, Nr. 14, 15. Juli 2002 (2002-07-15), Seiten 1073-1075, XP001124412 ISSN: 0261-8028

## Beschreibung

Die vorliegende Erfindung betrifft eine reflexionsmindernde Schicht und ein Verfahren zur Herstellung einer Beschichtung mit dieser reflexionsmindernden Schicht und ein Substrat, insbesondere Sicherheitsglas, das diese Beschichtung aufweist.

Durch Reflexion des sichtbaren und nichtsichtbaren Spektralanteils des Sonnenlichts sinkt die Effizienz der Sonnenlichtausnutzung beispielsweise bei solaren Wärmeabsorbern oder Photovoltaikmodulen, die als Abdeckung eine Glasscheibe aufweisen. Gleiches gilt auch für Gewächshausverglasungen, die in der Regel so konzipiert sein sollten, dass bei zunehmender Lichteinstrahlung der Innenraum entsprechend erwärmt wird. Üblicherweise werden für die genannten Glaskonstrukte thermisch vorgespannte Glasscheiben mit darauf aufgebrachten reflexionsmindernden Schichten eingesetzt.

Es sind aus dem Stand der Technik reflexionsmindernde Schichten oder sog. Entspiegelungsschichten aus Magnesiumfluorid bekannt. Dabei entspricht der Brechungsindex des Magnesiumfluorids in idealer Weise der Formel (Brechungsindex Glas)^{1/2} für eine sehr gute entspiegelnde Wirkung. Magnesiumfluorid ist allerdings nicht sehr witterungsstabil, so dass der Einsatz dieser Schichten, beispielsweise für Photovoltaikmodule und Gewächshausgläser, stark eingeschränkt ist.

Die US 5,116,665 beschreibt eine Beschichtung zum Schutz eines Substrates wie etwa Glas, wobei die Beschichtung hart, temperatur- und feuchtigkeitsbeständig sowie antistatisch sein soll. Die Beschichtung umfasst Silizium, Kohlenstoff, Stickstoff, Sauerstoff und Wasserstoff.

Die JP 2001 272 506 A beschreibt eine Anti-Reflexionsbeschichtung für ein Substrat wie etwa Glas. Der Reflexionsindex der Beschichtung wird über eine Porosität der Beschichtung eingestellt. Die Beschichtung wird mittels CVD abgeschieden und umfasst Siliziumdioxid sowie Alkylgruppen, bspw. Phenylgruppen. Letztere werden durch eine nachgelagerte Wärmebehandlung ausgetrieben, wodurch sich die Poren ergeben. Die Größe der Öffnungen kann von einer Oberfläche der Beschichtung in die Tiefe, d.h. in Richtung auf das Substrat hin, abnehmen.

Weiterer, allerdings weniger relevanter, Stand der Technik geht aus der US 4,478,873 A und der EP 1 074 526 A2 hervor.

Ein weiteres Beispiel für Entspiegelungsschichten sind solche, die nach dem Sol-Gel-Verfahren aufgetragen werden.

Dabei wird das zu beschichtende Substrat in eine Lösung eingetaucht, die die Hauptschichtkomponente, meist an organische Reste gebunden, enthält. Im nachfolgenden Trockenvorgang bleibt die Schichtkomponente auf dem Substrat zusammen mit den organischen Resten zurück. Diese Schichten sind zunächst sehr weich und kratzanfällig.

Herkömmlicherweise wird als Ausgangslösung eine Mischung verwendet, die Siliciumdioxid dispergiert in Teilchengrößen im Nanometerbereich enthält. Nach Auftragen der Mischung auf dem Substrat erfolgen in der Regel ein oder mehrere Temperschritte. Dabei bilden sich Schichten, die Hohlräume enthalten, so dass der Brechungsindex der Schicht im Vergleich zum Brechungsindex des Bulkmaterials abgesenkt wird. Je nach Temperaturbelastung bleiben unterschiedlich große Hohlräume zurück, an denen sich das Licht streut.

Ähnliche Entspieglungsschichten lassen sich durch Aufsprühen von Lösungen und nachfolgenden Temperschritten erreichen. Während beim Tauchbeschichten in der Regel eine gute Schichtdickenuniformität von bis zu +/- 1% erreicht wird, sind beim Sprühprozess Schwankungen der Schichtdicke von +/- 5% üblich. Die Entspiegelungswirkung hängt von dem Produkt aus Brechungsindex der Schicht x Schichtdicke ab. Damit eignet sich das Sprühbeschichten nur bedingt für die Herstellung optisch gleichmäßig entspiegelter Beschichtungen.

Ein Nachteil des Tauchbeschichtens besteht darin, dass einerseits, bedingt durch das unterschiedliche Ablaufverhalten in Randnähe im Vergleich zur Substratmitte und andererseits durch eine notwendige Aufhängung der Scheibe, Teilbereiche der Scheibe entweder nicht oder nur mit abweichender Schichtdicke beschichtet werden. Ein weiterer Nachteil der Tauchbeschichtung besteht darin, dass bedingt durch das Ablaufen der Beschichtungslösung auf der Glasoberfläche daran anhaftende Teilchen optisch vergrößert werden. Alle diese Effekte führen dazu, dass Teilbereiche des beschichteten Substrates verworfen werden müssen. Ein anderer Nachteil der Tauchbeschichtung sind die anschließenden Hochtemperaturbehandlungen, die wegen der Kratzempfindlichkeit der ungetemperten Schicht auch dann zusätzlich erforderlich sind, wenn die beschichtete Scheibe z.B. thermisch bei 600°C vorgespannt wird.

Eine weitere Möglichkeit, die Oberfläche eines Glassubstrats entspiegelnd auszugestalten, ist das Ätzen der Oberfläche einer Glasscheibe, wobei in der angeätzten Schicht die Mischung aus dem verbliebenen Glas und Luft den für die Reflexionsminderung gewünschten Wert annimmt. Solche geätzten Glasscheiben werden mit Flusssäure geätzt. Dieser Prozess erfordert umfangreiche Vorkehrungen für einen sicheren und umweltneutralen Betrieb. Das Ätzmittel selbst setzt flüchtige, fluorierte Substanzen frei, die z.B. die Ozonbildung in den oberen Atmosphärenschichten behindern.

Ein Nachteil der additiv oder subtraktiv aus Lösungen oder Dispersionen hergestellten Schichten besteht in ihrer relativ offenporigen Struktur. Es entstehen bei den bekannten Verfahren Schichten mit Hohlräumen im Bereich von einigen bis einigen 100 Nanometern. Die Hohlräume sind zur Oberfläche hin offen und können so z. B. Wasser oder Schmutz aus der Umgebung aufnehmen. Dadurch kommt es zu optischer Degradation und/oder Korrosionserscheinungen.

Mit Interferenzschichtensystemen lassen sich weiterhin deutlich höhere Reflexionsminderungen erreichen als mit Einfachschichten. Neben höheren Anforderungen an die Schichtdickenuniformität und der Tatsache, dass Mehrfachschichten in der Regel mit höheren Herstellungskosten verbunden sind als Einfachschichten, vermindern solche Schichtpakete die Lichtreflexion in dem dafür vorgesehenen Wellenlängenbereich des Lichts. In Bereichen außerhalb der Reflexionsminderung wirken die Schichten reflexionserhöhend.

Um eine sehr breitbandige Entspiegelung z. B. vom Ultraviolett- bis in den Infrarotbereich des Sonnenspektrums zu erreichen, müssen sehr viele Schichten wechselnden Brechungsindizes im Interferenzschichtpaket übereinander abgeschieden werden. Eine so genannte Breitbandentspiegelung mit Interferenzschichten ist mithin sehr teuer.

Es ist Aufgabe der vorliegenden Erfindung, eine Einfachschicht mit einer Reflexionsminderung über das gesamte Sonnenlichtspektrum zur Verfügung zu stellen, die umweltfreundlich und kostengünstig herzustellen ist und eine ausgezeichnete Beständigkeit gegenüber äußeren Einflüssen aufweist.

Diese Aufgabe wird mit den in den Ansprüchen definierten Verfahren gelöst. Die vorliegende Erfindung betrifft ein Verfahren zur Herstellung einer reflexionsmindernden Beschichtung auf einem transparenten Substrat, bei dem mindestens eine Schicht, die Silicium, Sauerstoff, Kohlenstoff und Wasserstoff enthält, auf mindestens einer Seite des Substrats abgeschieden wird und anschließend in dieser mindestens einen Schicht der Kohlenstoff- und Wasserstoffgehalt reduziert wird.

Die vorliegende Erfindung betrifft ebenfalls eine reflexionsmindernde Schicht.

Es hat sich erfindungsgemäß herausgestellt, dass durch Reduktion des Kohlenstoff- und Wasserstoffgehalts in der mindestens einen Schicht auf dem Substrat in der Schicht selbst Hohlräume in einem gänzlich anderen Mechanismus und in einer anderen Ausbildung als bei aus Flüssigkeiten additiv oder subtraktiv hergestellten Schichten entstehen. Während bei den vorgenannten Verfahren Hohlräume im Bereich von einer Größenordnung von einigen bis einigen zehn Nanometern bis hinzu einigen hundert Nanometern Abmessung entstehen, gelingt es im erfindungsgemäßen Verfahren, den Wasserstoff- und Kohlenstoffgehalt so zu reduzieren, dass Leerstellen in atomarem Maßstab entstehen und verbleiben, welche annähernd homogen über die Schicht verteilt sind.

Dadurch kommt es zu einer deutlichen Verminderung der Reduktion des Brechungsindex gegenüber der Siliciumdioxidumgebung, womit die Transmission des Sonnenlichts durch die Schicht breitbandig erhöht wird. Gleichzeitig ist die Schicht gerade wegen der homogenen Fehlstellenbildung deutlich weniger anfällig, z. B. gegenüber einer Wasseraufnahme aus der Umgebung.

Die nach dem erfindungsgemäßen Verfahren hergestellte Einfachbeschichtung weist eine hervorragende Stabilität auf und kann die üblicherweise dem thermischen Vorspannprozess des Glases vorgelagerte Prozessschritte, wie das Schneiden oder die Kantenbearbeitung, ohne Beschädigung überstehen. Die Ausbildung der Schicht auf dem Substrat erfolgt günstigerweise beim Vorspannen eines unbeschichteten transparenten Substrats, so dass kein zusätzlicher Energieaufwand für die Herstellung eines entspiegelten Einscheibensicherheitsglases notwendig ist.

Die erfindungsgemäß hergestellte Beschichtung weist eine hervorragende Antireflexwirkung gegenüber Sonnenlichtstrahlung im Wellenbereich von 300 nm bis 2500 nm auf, wobei das transparente Substrat einen Brechungsindex n von n > 1,4 und die mindestens eine Schicht einen Brechnungsindex n' von n' < 1,32 aufweisen.

In einer bevorzugten Ausführungsform des erfindungsgemäßen Verfahrens wird zunächst mindestens eine Einfachschicht, die 5 - 30 Atom-% Silicium, 20 - 60 Atom-% Sauerstoff, 2 - 30 Atom-% Kohlenstoff und 2 - 30 Atom-% Wasserstoff enthält, auf einem transparenten Substrat aufgebaut.

In dem nachfolgenden Prozessschritt wird der Kohlenstoffgehalt vorzugsweise auf < 15 Atom-%, insbesondere auf < 5 Atom-% Kohlenstoff und der Wasserstoffgehalt vorzugsweise auf < 20 Atom-% Wasserstoff, insbesondere auf < 10 Atom-% Wasserstoff reduziert, ohne dass in einem nennenswerten Umfang Hohlräume (Poren) mit einem mittleren Durchmesser > 5 nm entstehen.

In der Schicht beträgt der Porenanteil von Poren mit einem mittleren Porendurchmesser von > 3 nm weniger als 10 Volumen- %, insbesondere weniger als 4 Volumen- %.

Die mindestens eine Schicht kann, in Abhängigkeit der späteren Verwendung des beschichteten transparenten Substrats, auch auf beiden Seiten des Substrats, entweder nacheinander oder gleichzeitig, abgeschieden werden.

In einer weiteren bevorzugten Ausführungsform des erfindungsgemäßen Verfahrens wird die mindestens eine Schicht in einer Schichtdicke im Bereich von 5 - 400 nm auf dem Substrat abgeschieden. Insbesondere beträgt die Schichtdicke 50 - 200 nm und ganz besonders bevorzugt beträgt sie 60 - 150 nm.

Die nach dem erfindungsgemäßen Verfahren auf dem transparenten Substrat abgeschiedene mindestens eine Schicht wird anschließend einer Behandlung unterworfen, mit der in dieser mindestens einen Schicht der Kohlenstoff- und Wasserstoffgehalt reduziert wird. Dieser Schritt wird bevorzugt durchgeführt, indem die mindestens eine Schicht getempert wird.

Es hat sich in der Praxis herausgestellt, dass eine Temperung der Schicht bei einer Temperatur im Bereich von 250 - 800°C für einen Zeitraum von weniger als 30 Minuten durchgeführt werden kann. Besonders gute reflexionsmindernde Schichten erhält man, wenn bei einer Temperatur im Bereich von maximal 700°C für einen Zeitraum mit Aufheiz- und Haltezeit von weniger als 15 Minuten getempert wird.

In einer alternativen Ausführungsform des erfindungsgemäßen Verfahrens kann die Reduktion des Kohlenstoff- und Wasserstoffgehalts in der mindestens einen Schicht ohne Tempern in Gegenwart von Sauerstoff erfolgen. Bevorzugt wird dabei ein Sauerstoffplasma eingesetzt.

In diesem Fall beträgt die Schichtdicke ≤ 250 nm, bevorzugt 30 - 250 nm und insbesondere 50 - 150 nm. Für die Dauer der Sauerstoffbehandlung liegt die Substrattemperatur zwischen Raumtemperatur und 350 °C vorzugsweise zwischen 180 °C und 350 °C. Während sich die Rate der Sauerstoffentfernung mit zunehmender Substrattemperatur bis 180 °C deutlich erhöht, wird bei Substrattemperaturen > 180 °C nur noch eine leichte Steigerung der Kohlenstoff-Entfernungsrate beobachtet.

Bei dem transparenten Substrat handelt es sich in der Regel um Glasscheiben, Verbundglasscheiben und insbesondere Floatglasscheiben. Geeignet sind allerdings auch Kunststoffscheiben oder Kunststofffolien, insbesondere solche Kunststofffolien, die bei der Herstellung von Verbundglas zwischen den Glasscheiben eingefügt werden.

Die Abscheidung der mindestens einen Schicht, die Silicium, Sauerstoff, Kohlenstoff und Wasserstoff enthält, auf dem Substrat kann nach einem PVD-Prozess, einem CVD-Prozess oder einer Kombination aus beiden Prozessen erfolgen.

In einem Verfahren wird die mindestens eine Schicht durch Sputtern von Silicium oder Siliciumdioxid in reaktiver Gasatmosphäre abgeschieden. Als Reaktivgas kann eine Mischung aus Alkenen und/oder Alkenen mit Sauerstoff, Argon und/oder Sauerstoff eingesetzt werden.

Es ist weiterhin bevorzugt, dem Reaktivgas siliciumhaltige Gase beizumischen, wobei deren Konzentration ≤ 5 Atom-% des Gesamtgasflusses ausmacht.

Erfindungsgemäß wird die Abscheidung der mindestens einen Schicht, die Silicium, Sauerstoff, Kohlenstoff und Wasserstoff enthält, nach einem CVD-Verfahren, mit Plasmaunterstützung, auf dem Substrat abgeschieden.

In einer bevorzugten Ausführungsform enthält der Gasraum eine Mischung aus Sauerstoff, mindestens einer Siliciumhaltigen Verbindung und/oder Kohlenstoff-haltigen Verbindung und/oder eines Edelgases. Die siliciumhaltige Verbindung enthält bevorzugt mindestens ein Sauerstoffatom direkt an das Siliciumatom gebunden.

Das Plasma im CVD-Verfahren wird durch Radiofrequenz- und/ oder Mikrowellenstrahlung angeregt. Die Anregungsstrahlung kann dem Plasma kontinuierlich oder erfindungsgemäß in zeitlich begrenzten Pulsen zugeführt werden.

In der Erfindung wird die Plasmaanregung gepulst betrieben. Mit dieser Verfahrensweise erreicht man die Darstellung der Schichtzusammensetzung in Form eines Gradienten, wobei die Pulspause dafür genutzt wird, die Zusammensetzung der Schicht zu steuern. Kürzere Pulspausen haben eine Erhöhung des Kohlenstoffanteils in der Schicht bei ansonsten gleichen Abscheidebedingungen zur Folge. Lediglich durch Varianten der Pulspause ist der Aufbau einer Gradientenschicht möglich.

Bei dieser Ausführungsform wird die Pulsdauer im Bereich von 0,1 bis 10 ms variiert und die Pulspause im Verhältnis 1:1 bis 1:500 zur Pulsdauer eingestellt.

Die Schicht kann auch einer Anordnung von mehreren, hintereinander geschalteten Abscheidequellen abgeschieden werden. Das Substrat durchläuft die verschiedenen Abscheidequellen, wobei sich die Schicht Quelle für Quelle aufbaut. Durch Varianten der Gaszusammensetzung und/oder der Dauer der Pulspause können so Gradientenschichten hergestellt werden.

In einem bevorzugten Schichtaufbau wird in der Antireflexschicht der Kohlenstoff- und Wasserstoffgehalt mit zunehmendem Abstand von der Substratfläche reduziert. Die Konzentrationsveränderung kann dabei kontinuierlich oder in Sprüngen erfolgen. In einer bevorzugten Ausführung wird eine Antireflexschicht in zwei Teilen auf mindestens einer Substratseite abgeschieden, deren substratnaher Teil, S₁, vor dem Entfernen des Kohlenstoffs aus der Schicht, 5 - 30 Atom-% Silicium, 20 - 60 Atom-% Sauerstoff, 2 - 30 Atom-% Kohlenstoff - vorzugsweise ≥ 15 Atom-% Kohlenstoff - und 2 - 30 Atom% Wasserstoff - vorzugsweise ≤ 15 Atom-% Wasserstoff - umfasst und die vom Substrat entferntere Schicht, S₂, 20 - 35 Atom-% Silicium, 40 - 67 Atom-% Sauerstoff und 0 - 15 Atom-% Kohlenstoff und 5 - 20 Atom-% Wasserstoff umfasst. Das Verhältnis der Schichtdicken der beiden Bereiche dS₁:dS₂ ist dabei bevorzugt > 5.

Die Oberfläche der mindestens einen Schicht kann abschließend hydrophob eingestellt werden. Diese Hydrophobisierung erfolgt durch eine weitere Behandlung in einem mindestens Silicium- und Kohlenstoff-haltigen Plasma.

Eine weitere Hydrophobisierung kann erfolgen, indem eine weitere Deckschicht abgeschieden wird, die im wesentlichen aus Kohlenstoff und Fluor besteht.

Die Dicke der Deckschicht sollte mindestens 0,3 nm aufweisen. Die Kohlenstoff- und Fluor-haltige Schicht kann ebenfalls durch eine Plasmabehandlung in einem flouriertem Kohlenwasserstoff abgeschieden werden.

Der Nutzen der Hydrophobisierungsschicht besteht darin, dass Wasser oder andere hydrophile Medien nicht oder nur erschwert mit der Schicht in Wechselwirkung treten können. Die Einfachheit der Reinigung der Schicht und ihre Langlebigkeit steigt. Darüber hinaus führt die hydrophobe Schicht oder Schichtoberfläche dazu, dass Wasser nur in großen Tropfen aufkondensiert und diese von einem nur wenig schräg geneigten Substrat rasch ablaufen. Damit wird die Lichtdurchlässigkeit bereits ab den frühen Morgenstunden auch bei Kondensatbildung (Tau) aus der Atmosphäre sichergestellt. Der Gesamtnutzungsgrad eines Solarkollektors (Wärme oder Strom) oder über die Zeit integrierte Lichtdurchlass einer Gewächshausscheibe steigt an.

Die erfindungsgemäße reflexionsmindernde Schicht ist auf einem transparenten Substrat angeordnet, das einen Brechungsindex n von n > 1,4 aufweist. Die reflexionsmindernde Schicht enthält Silicium, Sauerstoff, Kohlenstoff und Wasserstoff und weist einen Brechungsindex n' von n' < 1,32 auf. Die reflexionsmindernde Schicht kann nach dem erfindungsgemäßen Verfahren hergestellt werden. Die Schicht zeichnet sich dadurch aus, dass der Porenanteil von Poren mit einem mittleren Durchmesser von > 3 nm weniger als 10 Volumen- %, bevorzugt weniger als 4 Volumen- %, beträgt.

Die reflexionsmindernde Schicht weist eine sich kontinuierlich oder diskontinuierlich verändernde Kohlenstoffkonzentration auf, wobei die Konzentration an Kohlenstoff in der Nähe der Luftseite der Schicht kleiner ist als in der Nähe des Substrates.

In einer weiteren Ausführungsform ist auf der reflexionsmindernden Schicht eine zusätzliche Hydrophobisierungsschicht von ≥ 0,3 nm Dicke aufgebracht. Bevorzugt umfasst die Hydrophobisierungsschicht mindestens 50 Atom- % Kohlenstoff.

Die mit dem erfindungsgemäßen Verfahren herstellte Beschichtung eignet sich insbesondere für Substrate, wie Sicherheitsgläser, z. B. Einscheibensicherheitsgläser, die beispielsweise bei Konstruktion von Gewächshäusern und Solarmodulen eingesetzt werden. Ein Beispiel dafür ist eine Abdeckscheibe für einen Sonnenkollektor mit thermischer und/oder photovoltaischer Funktionsweise mit einem erfindungsgemäß beschichteten Einscheibensicherheitsglas.

## Patentansprüche

1. Verfahren zur Herstellung einer reflexionsmindernden Beschichtung auf einem transparenten Substrat,
bei dem mindestens eine Schicht, die Silicium, Sauerstoff, Kohlenstoff und Wasserstoff enthält, auf mindestens einer Seite des Substrats abgeschieden wird,
wobei die mindestens eine Schicht in einem CVD-Verfahren mit Plasmaunterstützung auf dem Substrat abgeschieden wird,
das Plasma durch Radiofrequenz- und/oder Mikrowellenstrahlung angeregt wird,
die Plasmaanregung gepulst betrieben wird,
und anschließend in dieser mindestens einen Schicht der Kohlenstoff- und Wasserstoffgehalt reduziert wird.

2. Verfahren nach Anspruch 1,
**dadurch gekennzeichnet,**
**dass** zur Bildung der mindestens einen Schicht 5 bis 30 Atom-% Silicium, 20 bis 60 Atom-% Sauerstoff, 2 bis 30 Atom-% Kohlenstoff und 2 bis 30 Atom-% Wasserstoff eingesetzt werden.

3. Verfahren nach Anspruch 1 oder 2,
**dadurch gekennzeichnet,**
**dass** der Kohlenstoffgehalt auf < 15 Atom-% und der Wasserstoffgehalt auf < 20 Atom-% reduziert werden.

4. Verfahren nach Anspruch 3,
**dadurch gekennzeichnet,**
**dass** der Kohlenstoffgehalt auf 5 Atom- % und der Wasserstoffgehalt auf < 10 Atom- % reduziert werden.

5. Verfahren nach einem der Ansprüche 1 bis 4,
**dadurch gekennzeichnet,**
**dass** die mindestens eine Schicht auf beiden Seiten des Substrats abgeschieden wird.

6. Verfahren nach einem der Ansprüche 1 bis 5,
**dadurch gekennzeichnet,**
**dass** die mindestens eine Schicht in einer Schichtdicke im Bereich von 5 bis 400 nm auf dem Substrat abgeschieden wird.

7. Verfahren nach Anspruch 6,
**dadurch gekennzeichnet,**
**dass** die Schichtdicke 50 bis 200 nm beträgt.

8. Verfahren nach Anspruch 7,
**dadurch gekennzeichnet,**
**dass** die Schichtdicke 60 bis 150 nm beträgt.

9. Verfahren nach einem der Ansprüche 1 bis 8,
**dadurch gekennzeichnet,**
**dass** die mindestens eine Schicht getempert wird.

10. Verfahren nach Anspruch 9,
**dadurch gekennzeichnet,**
**dass** die Schicht bei einer Temperatur im Bereich von 250 bis 800 °C für einen Zeitraum von weniger als 30 Minuten getempert wird.

11. Verfahren nach Anspruch 10,
**dadurch gekennzeichnet,**
**dass** bei einer Temperatur im Bereich von maximal 700°C für einen Zeitraum von weniger als 15 Minuten getempert wird.

12. Verfahren nach einem der Ansprüche 1 bis 8,
**dadurch gekennzeichnet,**
**dass** die mindestens eine Schicht in Gegenwart von Sauerstoff behandelt wird.

13. Verfahren nach Anspruch 12,
**dadurch gekennzeichnet,**
**dass** ein Sauerstoffplasma eingesetzt wird.

14. Verfahren nach Anspruch 12 oder 13,
**dadurch gekennzeichnet,**
**dass** die Substrattemperatur zwischen Raumtemperatur und 350 °C eingestellt wird.

15. Verfahren nach Anspruch 14,
**dadurch gekennzeichnet,**
**dass** die Substrattemperatur im Bereich zwischen 180 °C und 350 °C eingestellt wird.

16. Verfahren nach einem der Ansprüche 1 bis 15,
**dadurch gekennzeichnet,**
**dass** als transparentes Substrat eine Glas- oder Kunststoffscheibe verwendet wird.

17. Verfahren nach Anspruch 16,
**dadurch gekennzeichnet,**
**dass** die Scheibe eine Floatglasscheibe ist.

18. Verfahren nach Anspruch 1,
**dadurch gekennzeichnet,**
**dass** eine Mischung aus Sauerstoff, mindestens einer Silicium- haltigen Verbindung und/oder Kohlenstoff-haltigen Verbindung und/oder eines Edelgases im Gasraum eingesetzt wird.

19. Verfahren nach Anspruch 1,
**dadurch gekennzeichnet,**
**dass** die Schichtzusammensetung als Gradient dargestellt wird.

20. Verfahren nach einem der Ansprüche 1 bis 19,
**dadurch gekennzeichnet,**
**dass** zwei Schichten auf mindestens einer Substratseite abgeschieden werden, wobei die Substrat nahe Schicht, vor dem Entfernen des Kohlenstoffs, 5 bis 30 Atom- % Silicium, 20 bis 60 Atom- % Sauerstoff, 2 bis 30 Atom- % Kohlenstoff und 2 bis 30 Atom- % Wasserstoff umfasst und die vom Substrat entfernte Schicht 20 bis 35 Atom- % Silicium, 40 bis 67 Atom- % Sauerstoff und 0 bis 15 Atom- % Kohlenstoff und 5 bis 20 Atom- % Wasserstoff umfasst.

21. Verfahren nach einem der Ansprüche 1 bis 20,
**dadurch gekennzeichnet,**
**dass** die mindestens eine Schicht auf ihrer Oberfläche hydrophob eingestellt wird.

22. Verfahren nach Anspruch 21,
**dadurch gekennzeichnet,**
**dass** die Hydrophobisierung durch Behandlung in einem mindestens Silicium- und Kohlenstoff-haltigen Plasma durchgeführt wird.

23. Verfahren nach einem der Ansprüche 1 bis 22,
**dadurch gekennzeichnet,**
**dass** über der mindestens einen Schicht eine Deckschicht abgeschieden wird, die im Wesentlichen aus Kohlenstoff und Fluor besteht.

24. Verfahren nach Anspruch 23,
**dadurch gekennzeichnet,**
**dass** die Deckschicht eine Dicke von mindestens 0,3 nm aufweist.

25. Reflexionsmindernde Schicht auf einem transparenten Substrat mit einem Brechungsindex n von n > 1,4, die Silicium, Sauerstoff, Kohlenstoff und Wasserstoff enthält und einen Brechungsindex n' von n' < 1,32 aufweist, wobei in der Schicht der Porenanteil von Poren mit einem mittleren Porendurchmesser von > 3 nm weniger als 10 Volumen- % beträgt, und
die Schicht eine sich kontinuierlich oder diskontinuierlich verändernde Kohlenstoffkonzentration aufweist und die Konzentration an Kohlenstoff in der Nähe der Luftseite der Schicht kleiner ist als in der Nähe des Substrates.

26. Reflexionsmindernde Schicht nach Anspruch 25,
**dadurch gekennzeichnet,**
**dass** der Porenanteil von Poren mit einem mittleren Porendurchmesser von > 3 nm weniger als 4 Volumen- % beträgt.

27. Schicht nach einem der Ansprüche 25 oder 26,
**dadurch gekennzeichnet,**
**dass** auf der Schicht eine zusätzliche Hydrophobisierungsschicht von ≥ 0,3 nm Dicke aufgebracht ist.

28. Schicht nach Anspruch 27,
**dadurch gekennzeichnet,**
**dass** die Hydrophobisierungsschicht mindestens 50 Atom-% Kohlenstoff umfasst.

29. Einscheibensicherheitsglas mit mindestens einer Schicht nach einem der Ansprüche 25 bis 28.

30. Abdeckscheibe für einen Solarkollektor mit thermischer und/oder photovoltaischer Funktionsweise mit einem Einscheibensicherheitsglas nach Anspruch 29.

## Claims

1. Method for manufacturing a reflection-reducing coating on a transparent substrate in which at least one coating containing silicon, oxygen, carbon and hydrogen is deposited on at least one side of the substrate, wherein the at least one coating is deposited on the substrate in a plasma-assisted CVD process,
the plasma is excited by radio frequency and/or microwave radiation,
the plasma excitation is pulsed,
and subsequently the content of carbon and hydrogen is reduced in this at least one coating.

2. Method according to claim 1,
**characterised in that**
5 to 30 atomic % silicon, 20 to 60 atomic % oxygen, 2 to 30 atomic % carbon and 2 to 30 atomic % hydrogen are used to form the at least one coating.

3. Method according to claim 1 or 2,
**characterised in that**
the carbon content is reduced to < 15 atomic % and the hydrogen content to < 20 atomic %.

4. Method according to claim 3,
**characterised in that**
the carbon content is reduced to 5 atomic % and the hydrogen content to < 10 atomic %.

5. Method according to one of claims 1 to 4,
**characterised in that**
the at least one coating is deposited on both sides of the substrate.

6. Method according to one of claims 1 to 5,
**characterised in that**
the at least one coating is deposited on the substrate in a coating thickness in the range of from 5 to 400 nm.

7. Method according to claim 6,
**characterised in that**
the coating thickness is 50 to 200 nm.

8. Method according to claim 7,
**characterised in that**
the coating thickness is 60 to 150 nm.

9. Method according to one of claims 1 to 8,
**characterised in that**
the at least one coating is tempered.

10. Method according to claim 9,
**characterised in that**
the coating is tempered at a temperature in the range of from 250 to 800 °C for a period of time of less than 30 minutes.

11. Method according to claim 10,
**characterised in that**
tempering is carried out at a temperature in the region of a maximum of 700 °C for a period of time of less than 15 minutes.

12. Method according to one of claims 1 to 8,
**characterised in that**
the at least one coating is treated in the presence of oxygen.

13. Method according to claim 12,
**characterised in that**
an oxygen plasma is used.

14. Method according to claim 12 or 13,
**characterised in that**
the substrate temperature is set between room or ambient temperature and 350 °C.

15. Method according to claim 14,
**characterised in that**
the substrate temperature is set in the range of between 180 °C and 350 °C.

16. Method according to one of claims 1 to 15,
**characterised in that**
a sheet of glass or plastic is used as the transparent substrate.

17. Method according to claim 16,
**characterised in that**
the sheet is a sheet of float glass.

18. Method according to claim 1,
**characterised in that**
a mixture of oxygen, at least one compound containing silicon and/or compound containing carbon and/or an inert gas is used in the gas chamber.

19. Method according to claim 1,
**characterised in that**
the composition of the coating is shown as a gradient.

20. Method according to one of claims 1 to 19,
**characterised in that**
two coatings are deposited on at least one side of the substrate, wherein the coating nearer to the substrate, prior to removal of the carbon, comprises 5 to 30 atomic % silicon, 20 to 60 atomic % oxygen, 2 to 30 atomic % carbon and 2 to 30 atomic % hydrogen and the coating further from the substrate comprises 20 to 35 atomic % silicon, 40 to 67 atomic % oxygen and 0 to 15 atomic % carbon and 5 to 20 atomic % hydrogen.

21. Method according to one of claims 1 to 20,
**characterised in that**
the at least one coating is given a water repellent finish on its surface.

22. Method according to claim 21,
**characterised in that**
the water repellent finishing is carried out by treatment in a plasma containing at least silicon and carbon.

23. Method according to one of claims 1 to 22,
**characterised in that**
a covering coating essentially consisting of carbon and fluorine is deposited over the at least one coating.

24. Method according to claim 23,
**characterised in that**
the covering coating has a thickness of at least 0.3 nm.

25. Reflection-reducing coating on a transparent substrate with a refractive index n of n > 1.4 which contains silicon, oxygen, carbon and hydrogen and has a refractive index n' of n' < 1.32, wherein in the coating the pore content of pores with a mean pore diameter of > 3 nm is less than 10 % by volume, and
the coating has a continuously or discontinuously changing carbon concentration and the concentration of carbon in the vicinity of the air side of the coating is less than in the vicinity of the substrate.

26. Reflection-reducing coating according to claim 25,
**characterised in that**
the pore content of pores with a mean pore diameter of > 3 nm is less than 4 % by volume.

27. Coating according to one of claims 25 or 26,
**characterised in that**
an additional water repellent finishing coating with a thickness of > 0.3 nm is applied on the coating.

28. Coating according to claim 27,
**characterised in that**
the water repellent finishing coating comprises at least 50 atomic % carbon.

29. Single-sheet safety glass with at least one coating according to one of claims 25 to 28.

30. Covering sheet for a thermally and/or photovoltaically operating solar collector with a single-sheet safety glass according to claim 29.

## Revendications

1. Procédé de fabrication d'un revêtement diminuant les réflexions sur un substrat transparent,
dans lequel au moins une couche contenant du silicium, de l'oxygène, du carbone et de l'hydrogène, est déposée sur au moins une face du substrat,
l'au moins une couche étant déposée sur le substrat par un procédé CVD assisté par plasma,
le plasma étant excité par un rayonnement radiofréquence et/ou micro-ondes,
l'excitation du plasma se faisant en mode pulsé, puis la teneur en carbone et en hydrogène étant réduite dans cette au moins une couche.

2. Procédé selon la revendication 1, **caractérisé en ce qu'**on utilise pour la formation de l'au moins une couche 5 à 30 % en atomes de silicium, 20 à 60 % en atomes d'oxygène, 2 à 30 % en atomes de carbone et 2 à 30 % en atomes d'hydrogène.

3. Procédé selon la revendication 1 ou 2, **caractérisé en ce que** la teneur en carbone est réduite à < 15 % en atomes et la teneur en hydrogène est réduite à < 20 % en atomes.

4. Procédé selon la revendication 3, **caractérisé en ce que** la teneur en carbone est réduite à 5 % en atomes et la teneur en hydrogène est réduite à < 10 % en atomes.

5. Procédé selon l'une des revendications 1 à 4, **caractérisé en ce que** l'au moins une couche est déposée sur les deux faces du substrat.

6. Procédé selon l'une des revendications 1 à 5, **caractérisé en ce que** l'au moins une couche est déposée sur le substrat sur une épaisseur de couche comprise dans la plage 5 à 400 nm.

7. Procédé selon la revendication 6, **caractérisé en ce que** l'épaisseur de couche est de 50 à 200 nm.

8. Procédé selon la revendication 7, **caractérisé en ce que** l'épaisseur de couche est de 60 à 150 nm.

9. Procédé selon l'une des revendications 1 à 8, **caractérisé en ce que** l'au moins une couche est soumise à une trempe.

10. Procédé selon la revendication 9, **caractérisé en ce que** la couche est soumise à une trempe à une température comprise dans la plage de 250 à 800°C pendant un laps de temps inférieur à 30 minutes.

11. Procédé selon la revendication 10, **caractérisé en ce que** la trempe est effectuée à une température comprise dans la plage allant à un maximum de 700°C pendant un laps de temps inférieur à 15 minutes.

12. Procédé selon l'une des revendications 1 à 8, **caractérisé en ce que** l'au moins une couche est traitée en présence d'oxygène.

13. Procédé selon la revendication 12, **caractérisé en ce qu'**on utilise un plasma d'oxygène.

14. Procédé selon la revendication 12 ou 13, **caractérisé en ce que** la température du substrat est ajustée entre la température ambiante et 350°C.

15. Procédé selon la revendication 14, **caractérisé en ce que** la température du substrat est ajustée dans la plage entre 180 °C et 350°C.

16. Procédé selon l'une des revendications 1 à 15, **caractérisé en ce qu'**on utilise en tant que substrat transparent une plaque de verre ou de plastique.

17. Procédé selon la revendication 16, **caractérisé en ce que** la plaque est une plaque de verre flotté.

18. Procédé selon la revendication 1, **caractérisé en ce qu'**on utilise dans l'espace de gaz un mélange d'oxygène, d'au moins un composé contenant du silicium et/ou d'un composé contenant du carbone, et/ou d'un gaz rare.

19. Procédé selon la revendication 1, **caractérisé en ce que** la composition de la couche présente un gradient.

20. Procédé selon l'une des revendications 1 à 19, **caractérisé en ce qu'**on dépose deux couches sur au moins une face du substrat, la couche proche du substrat comprenant avant élimination du carbone 5 à 30 % en atomes de silicium, 20 à 60 % en atomes d'oxygène, 2 à 30 % en atomes de carbone et 2 à 30 % en atomes d'hydrogène, et la couche éloignée du substrat comprenant 20 à 35 % en atomes de silicium, 40 à 67 % en atomes d'oxygène et 0 à 15 % en atomes de carbone et 5 à 20 % en atomes d'hydrogène.

21. Procédé selon l'une des revendications 1 à 20, **caractérisé en ce que** l'au moins une couche est ajustée sur sa surface à des conditions hydrophobes.

22. Procédé selon la revendication 21, **caractérisé en ce que** l'hydrophobisation est mise en oeuvre par traitement dans un plasma contenant au moins du silicium et du carbone.

23. Procédé selon l'une des revendications 1 à 22, **caractérisé en ce qu'**on dépose sur l'au moins une couche une couche de couverture, qui pour l'essentiel est constituée de carbone et de fluor.

24. Procédé selon la revendication 23, **caractérisé en ce que** la couche de couverture présente une épaisseur d'au moins 0,3 nm.

25. Couche diminuant les réflexions sur un substrat transparent ayant un indice de réfraction n tel que n > 1,4, qui contient du silicium, de l'oxygène, du carbone et de l'hydrogène et présente un indice de réfraction n' tel que n' < 1,32, la proportion, dans la couche, des pores ayant un diamètre moyen de pore > 3 nm étant inférieure à 10 % en volume, et
la couche présentant une concentration de carbone variant d'une manière continue ou discontinue, et la concentration du carbone étant au voisinage du côté air de la couche inférieure à celle qu'elle est au voisinage du substrat.

26. Couche diminuant les réflexions selon la revendication 25, **caractérisée en ce que** la proportion des pores ayant un diamètre moyen de pore > 3 nm est inférieure à 4 % en volume.

27. Couche selon l'une des revendications 25 ou 26, **caractérisée en ce qu'**une couche supplémentaire d'hydrophobisation, ayant une épaisseur > 0,3 nm, est appliquée sur la couche.

28. Couche selon la revendication 27, **caractérisée en ce que** la couche d'hydrophobisation comprend au moins 50 % en atomes de carbone.

29. Verre de sécurité trempé comportant au moins une couche selon l'une des revendications 25 à 28.

30. Couverture pour un collecteur solaire à fonctionnement thermique et/ou photovoltaïque, comportant un verre de sécurité trempé selon la revendication 29.
